# EUROPÄISCHE PATENTSCHRIFT

(11) **EP 1 913 810 B1**
(45) Veröffentlichungstag und Bekanntmachung des Hinweises auf die Patenterteilung: **06.06.2012**
(21) Anmeldenummer: 07118289.3
(22) Anmeldetag: 11.10.2007
(51) Int. Cl.: A01G 25/06, E03B 3/00, E03F 1/00

(54) **Versorgungsrinne**
Supply channel
Rainure de distribution

(30) Priorität: 19.10.2006 DE 102006049388
(43) Veröffentlichungstag der Anmeldung: 23.04.2008
(73) Patentinhaber: ACO Severin Ahlmann GmbH & Co. KG, 24768 Rendsburg (DE)
(72) Erfinder: Messerschmidt, Heino, 25585 Lütjenwestedt (DE); Müller, Michael, 24248 Mönkeberg (DE); Sievers, Anja, 24738 Osterrönfeld (DE)
(74) Vertreter: Bohnenberger, Johannes

(56) Entgegenhaltungen:
- EP-A- 0 194 963
- WO-A-2004/107850
- DE-U1- 29 618 006
- DE-U1-202006 010 713
- FR-A- 2 608 366
- GB-A- 624 553
- GB-A- 2 268 866
- US-A- 4 934 404

## Beschreibung

Die vorliegende Erfindung betrifft eine Versorgungsrinne zur Oberflächenbe- und entwässerung.

Aus dem Stand der Technik sind insbesondere Versorgungsrinnen zur Oberflächenentwässerung bekannt, die in einen Boden eingebaut werden, um von einer angrenzenden Oberfläche Niederschlagswasser oder ähnliches Wasser aufzunehmen und abzuleiten. In diesem Zusammenhang ist unter der Bezeichnung "Rinne" hier nicht nur ein Rinnenbauwerk zu verstehen, sondern auch jeder ähnliche in einen Boden einbaubare Versorgungskörper, der der Aufnahme und Weiterleitung von Oberflächenwasser dient. Insbesondere sind darunter also auch Ablaufschächte, Bodeneinsätze oder ähnliche Entwässerungskörper zu verstehen. Unter Oberflächenbewässerung ist hier sowohl eine Bewässerung der Oberfläche von oben, als auch eine Bewässerung des angrenzenden Untergrundes, d.h. also eine Bewässerung "von unten", d.h. also insbesondere des Wurzelwerkes, zu verstehen. Derartige Rinnen sind beispielsweise aus WO 2004/107850 oder EP 0 194 963 bekannt.

Üblicherweise sind derartige Rinnen zur Oberflächenentwässerung mit einer Abdeckung versehen, die entsprechende Einlauföffnungen aufweist, um die Einleitung des Oberflächenwassers zu ermöglichen. Diese Abdeckung kann entweder lösbar oder integral mit der Versorgungsrinne und insbesondere mit dem Rinnenkörper der Versorgungsrinne ausgebildet sein. Unter Rinnenkörper ist hierbei ebenfalls wiederum jede Art von Körper zu verstehen, aus der sich eine Versorgungsrinne nach der obigen Definition bilden lässt, insbesondere also Rinnenkörper, Schachtkörper oder ähnliche Körper.

Darüber hinaus sind aus dem Stand der Technik Rinnen und insbesondere Dachrinnen bekannt, die an Dächern, Flachdächern oder ähnlichen Gebäudeflächen angeordnet sind und der Ableitung von Oberflächenwasser dienen. Auch für derartige Entwässerungsrinnen ist die nachfolgend beschriebene erfindungsgemäße Versorgungsrinne einsetzbar.

Des Weiteren sind aus dem Stand der Technik Bewässerungsvorrichtungen bekannt, die der Oberflächenbewässerung dienen. Derartige Bewässerungsvorrichtungen umfassen meist eine Bewässerungszuleitung, die das Bewässerungswasser zu entsprechenden Anschluss- oder Verteilerelementen leitet. An diese Anschluss- oder Verteilerelemente kann dann ein entsprechendes Bewässerungselement angeschlossen werden, welches das zugeleitete Bewässerungswasser an die zu bewässernde Oberfläche abgibt. Hier ist der Anschluss entsprechender Sprinklereinrichtungen oder aber auch der Anschluss von Bewässerungsschläuchen möglich.

Das Verlegen sowohl der oben genannten Bewässerungsvorrichtungen als auch der Entwässerungsvorrichtungen ist meist sehr aufwändig und mit langwierigen und teuren Grabungs- oder Montagearbeiten verbunden. Insbesondere in Bereichen, in denen sowohl eine Be- als auch eine Entwässerung notwendig ist, fallen so doppelte Arbeit und finanzielle Belastungen an.

Darüber hinaus müssen sowohl Bewässerungseinrichtungen als auch Entwässerungseinrichtungen in bestimmten Abständen gewartet und überprüft werden, was gerade bei den Bewässerungssystemen, die meist unter der Erdoberfläche verlegt sind, sehr problematisch und kostenaufwändig ist.

Vorliegender Erfindung liegt folglich die Aufgabe zu Grunde, ein Be- und Entwässerungssystem bzw. eine entsprechende Versorgungsrinne zu entwickeln, die einen reduzierten Installations- und Wartungsaufwand mit sich bringt.

Vorliegende Aufgabe wird durch eine in einen Boden einbaubare Versorgungsrinne gemäß Patentanspruch 1 und durch ein Be- und Entwässerungssystem gemäß Patentanspruch 12 gelöst.

Grundlegender Gedanke und Vorteil dieser Erfindung ist die Integration einer Entwässerungsvorrichtung und einer Bewässerungsvorrichtung in einer Versorgungsrinne. Dies spart insbesondere Verlegekosten und erleichtert zudem die Wartung. Besonders vorteilhaft ist ein derartiges Be- und Entwässerungssystem bzw. eine derartige Versorgungsrinne in Bereichen, bei denen die gleichzeitige Be- und Entwässerung nötig ist. Hier sind beispielsweise Oberflächen zu nennen, bei denen ein gepflasterter oder versiegelter Boden an eine Grünfläche oder einen ähnlichen Naturboden angrenzt. Dies ist beispielsweise bei Sportrasenflächen oder Verkehrsflächen der Fall. Ein weiteres Anwendungsgebiet einer solchen Versorgungsrinne bzw. dieses Be- und Entwässerungssystems liegt unter anderem auch in der Automobilindustrie und hier im Bau von Aquaplaning- oder ähnlichen Teststrecken.

Eine weitere Anwendung findet sich auch bei so genannten Baumschutzrosten oder Baumrosten zum Abdecken des Wurzelbereiches von Bäumen und dergleichen Pflanzen. Auch hier ist es mitunter nötig sowohl zu bewässern als auch zu entwässern, so dass durch die Anwendung der erfindungsgemäßen Versorgungsrinne in Kombination mit einem Baumschutzrost oder sogar durch die Ausbildung der Versorgungsrinne als Baumschutzrost mit entsprechender Entwässerungs- und Bewässerungsvorrichtung eine sehr kostengünstige und wartungsarme Vorrichtung geschaffen wird.

Die erfindungsgemäße Versorgungsrinne hat zudem bei Flachdächern oder ähnlichen begrünten Dächern einen vorteilhaften Anwendungsbereich, da hier sowohl Entwässerungsvorrichtungen als auch Bewässerungsvorrichtungen benötigt werden, um die begrünten Dächer erfolgreich in einem ökologischen Gleichgewicht zu halten. Durch die integrale Ausbildung der Be- und Entwässerungsvorrichtungen in einer Versorgungsrinne kann so der Montage- und Wartungsaufwand auf ein Minimum reduziert werden. Darüber hinaus reduzieren sich die Abmessungen für die benötigten Versorgungsvorrichtungen, was insbesondere bei der architektonischen Ausbildung der Dächer von Vorteil ist.

Besonders vorteilhaft ist, dass die Entwässerungsvorrichtung und die Bewässerungsvorrichtung in einem Bauteil integriert ausgebildet sind. Dabei kann die Entwässerungsvorrichtung jede bekannte Art von Entwässerungsrinne oder Entwässerungsrohr sein, das der Einleitung und Ableitung von Oberflächenwasser dient. Die Bewässerungsvorrichtung selbst hat wenigstens eine Bewässerungszuleitung zur Zuleitung von Bewässerungswasser und wenigstens ein Auslasselement, das der Aus- bzw. Weiterleitung des Bewässerungswassers dient. Dieses Auslasselement kann insbesondere zum Anschluss eines Bewässerungsmittels, beispielsweise eines Bewässerungsschlauches, einer Sprinklereinrichtung oder entsprechender Verteilerrinnen dienen, über die Wasser gleichmäßig zu Bewässerungszwecken verteilt werden kann. Natürlich kann das Auslasselement auch von Haus aus als Verteilerelement, Sprinkler-Element etc. fungieren, so dass das zugeführte Bewässerungswasser direkt über das Auslasselement den zu bewässernden Flächen zugeführt wird.

Vorzugsweise umfasst dabei die Bewässerungsvorrichtung und insbesondere die Bewässerungsleitung eine Druckleitung, so dass das zugeleitete Bewässerungswasser unter Druck über das Auslasselement weiterverteilt werden kann. Dies ist insbesondere bei der Verwendung von Sprinkler-Einrichtungen oder ähnlichen Sprüh-Einrichtungen vorteilhaft. Natürlich ist es aber auch möglich, entsprechende Druckleitungen nur in Steigungsbereichen auszuführen, um entsprechende Höhenniveaus zu überwinden und in Gefällebereichen entsprechende Rinnenleitungen zur Zuleitung des Bewässerungswassers zu nutzen. Prinzipiell sind hier sämtliche aus dem Bereich der Wasserversorgung gängigen Leitungstechniken anwendbar, insbesondere also die Ausbildung geschlossener Rohrleitungssysteme, offener Trog- und Rinnensysteme etc.

Vorzugsweise ist die Bewässerungsvorrichtung wenigstens teilweise in eine Abdeckung der Versorgungsrinne integriert. Hier ist es beispielsweise denkbar, insbesondere die Bewässerungszuleitung in der Abdeckung zu führen, da dies eine leichte Zugänglichkeit und darüber hinaus ein leichtes Verlegen ohne eine Behinderung des Ablaufsverhaltens der Entwässerungsvorrichtung bedeutet. Die Ausbildung der entsprechenden Auslasselemente kann hier natürlich auch in der Abdeckung erfolgen, so dass von der Oberfläche bzw. von außen ein leichter Zugang sichergestellt ist. In diesem Zusammenhang ist jedoch auch zu erwähnen, dass die zuvor genannten Auslasselemente auch so angeordnet sein können, dass sie der Reinigung und Spülung der Entwässerungsvorrichtung dienen. Hier ist beispielsweise die Anordnung von Auslasselementen an einer der Entwässerungsvorrichtung zugewandten Unterseite der Abdeckung denkbar. Bei Bedarf können dann die Auslasselemente zum Spülen der Entwässerungsvorrichtung oder eines zugeordneten Entwässerungssystems verwendet werden.

Es ist aber auch vorteilhaft, die Bewässerungsvorrichtung wenigstens teilweise in einen Rinnenkörper der Versorgungsrinne zu integrieren, wobei hier unter Rinnenkörper wie zuvor schon erwähnt, sämtliche Körper einer erfindungsgemäßen Versorgungsrinne zu verstehen sind. Die wenigstens teilweise Integration der Bewässerungsvorrichtung in den Rinnenkörper ist eine äußerst Platz sparende und sehr wartungsfreundliche Ausbildung, da unter anderem bei Versorgungsrinnen mit lösbarer Abdeckung die Bewässerungsvorrichtung das Ablösen der Abdeckung nicht behindert. Die Integration der Bewässerungsvorrichtung im oder am Rinnenkörper der Versorgungsrinne kann dabei über entsprechende Ausnehmungen im Rinnenkörper, über Adapterelemente an einer Wandung des Rinnenkörpers zum Befestigen der Bewässerungsvorrichtung, oder aber auch über im Rinnenkörper ausgebildete, beispielsweise eingegossene oder durch Hohlräume gebildete Bewässerungsvorrichtungselemente, die dann als Bewässerungszuleitung fungieren.

So ist es beispielsweise denkbar, einen Hohlraum im Inneren des Rinnenkörpers zu bilden, der der Zuleitung des Bewässerungswassers dient. Auch ist es möglich, eine Ausnehmung am Rinnenkörper auszubilden, in die dann ein Teil der Bewässerungsvorrichtung, beispielsweise die Bewässerungszuleitung eingelegt werden kann. Auch ist es denkbar, beispielsweise die Bewässerungszuleitung als Adapterelement so auszubilden, dass sie auf die Versorgungsrinne oder einen Teil davon aufgelegt oder angelegt werden kann. Beispielsweise kann bei einer im Querschnitt U-profilförmig ausgeführten Versorgungsrinne ein Schenkel des U's etwas kürzer als der andere Schenkel ausgebildet werden, um dort dann eine entsprechend komplementär ausgebildete Bewässerungszuleitung aufzulegen, die dann im Zusammenspiel mit dem anderen Schenkel des U-Profils die Abdeckung trägt.

Vorzugsweise umfasst die Bewässerungsvorrichtung wenigstens ein Adapterelement zum insbesondere fluiddichten Anschluss einer weiteren Bewässerungsvorrichtung. Auf diese Weise ist es möglich, mehrere Versorgungsrinnen, die jeweils eine erfindungsgemäße Bewässerungsvorrichtung umfassen, miteinander zu kombinieren, um so ein größeres Be-und Entwässerungssystem auszubilden.

Bei der Ausbildung der Adapterelemente können sämtliche aus dem Stand der Technik bekannten Anschlusskonstruktionen verwendet werden. Hier ist es beispielsweise möglich, entsprechende mit Ringdichtung versehenen Bajonettverschlüsse, oder ähnliche Schnappverschlüsse zu verwenden. Vorzugsweise sind die zu verwendenden Adapterelemente dabei als Schnellverschluss ausgebildet, so dass sie beim Verlegen der jeweiligen Versorgungsrinnen schnell miteinander verbunden und auch wieder gelöst werden können.

Vorzugsweise weist die Entwässerungsvorrichtung wenigstens ein Verbindungselement zum insbesondere fluiddichten Anschluss einer weiteren Entwässerungsvorrichtung auf. Hier gilt das zuvor Genannte, wobei hier insbesondere aus dem Stand der Technik bekannte Nut- und Federverbindungselemente oder ähnliche Steck- und Schnappverbindungselemente anwendbar sind, um mehrere Versorgungsrinnen und insbesondere die Entwässerungsvorrichtungen der erfindungsgemäßen Versorgungsrinnen miteinander zu verbinden. Bei der Integration der Bewässerungsvorrichtung in die Rinnenkörper der Versorgungsrinnen ist dann insbesondere darauf zu achten, dass der gleichzeitige Anschluss von Entwässerungsvorrichtungen und Bewässerungsvorrichtungen möglich ist. Hier sind beispielsweise entsprechende Steckkonstruktionen als Verbindungselement und Adapterelement bevorzugt.

Die zuvor genannten Verbindungselemente zur Verbindung mehrerer Entwässerungsvorrichtungen, als auch die zuvor genannten Adapterelemente zum Anschluss weiterer Bewässerungsvorrichtungen dienen natürlich auch der Aufnahme entsprechender Abschlusselemente, um einen insbesondere fluiddichten Abschluss der jeweiligen Vorrichtung zu gewährleisten. Auch hier sind sämtliche aus dem Stand der Technik bekannten Verschlussmöglichkeiten anwendbar.

Vorzugsweise weist das Auslasselement der Entwässerungsvorrichtung, dem das Bewässerungswasser über die Bewässerungszuleitung zugeführt wird, ein Schnellverschlusselement zum Anschluss eines Bewässerungsmittels und insbesondere einer Sprinkler-Einrichtung auf. Auf diese Weise ist es möglich, über die an der Versorgungsrinne ausgebildeten Auslasselemente schnell und unkompliziert entsprechende Bewässerungsmittel anzuschließen. Wie zuvor bereits erwähnt, handelt es sich bei diesen Bewässerungsmitteln u.a. um Sprinkler-Einrichtungen, entsprechende Schlauchmittel zur Bewässerung, Verteilerrinnen oder sonstige aus dem Stand der Technik bekannten Mittel der Oberflächen-, Flächen- oder Wurzelbewässerung. Zudem ist es natürlich auch denkbar, dass die Auslasselemente selbst als solche Bewässerungsmittel fungieren. Vorzugsweise sind die Auslasselemente auch als Ventile, d.h. als Automatikventile oder manuell verstellbare Ventile bzw. Drosselelemente ausgebildet, um das Ausfließen des Bewässerungswassers zu steuern. Darüber hinaus ist es möglich, das Auslasselement, wie zuvor bereits erwähnt, so anzuordnen, dass eine Bewässerung nicht nur der Oberfläche, sondern auch des anliegenden Untergrundes möglich ist. Beispielsweise kann das Auslasselement auch an einer Außenwandung des Rinnenkörpers angeordnet werden, so dass eine Bewässerung direkt in den Untergrund erfolgt.

Vorzugsweise steht die Entwässerungsvorrichtung und die Bewässerungsvorrichtung der Versorgungsrinne mit einem Wasserreservoir in Fluidverbindung. Auf diese Weise ist es möglich, dass über die Entwässerungsvorrichtung abgeleitetes Wasser im Wasserreservoir aufzufangen und über die Bewässerungsvorrichtung zur Oberflächen- oder Flächenbewässerung zu verwenden.

Das bedeutet also, dass das erfindungsgemäße Be- und Entwässerungssystem bzw. die Versorgungsrinne einen mehr oder weniger geschlossenen Kreislauf bilden bzw. in diesen eingebunden sind, bei dem das abgeleitete Wasser wieder zur Bewässerung verwendet wird. Natürlich ist es dankbar, das Wasserreservoir selber mit einer externen Zuleitung zu versehen, so dass nicht nur abgeleitetes Entwässerungswasser, sondern auch externes Wasser zur Bewässerung zur Verfügung steht, was gerade in trockenen Perioden unabdingbar ist. Als Wasserreservoir kann hier sowohl ein externes Wasserreservoir verwendet werden, das über entsprechende Leitungsmittel mit der Versorgungsrinne bzw. mit dem Be- und Entwässerungssystem verbunden ist, als auch ein in die Rinne integriertes Wasserreservoir verwendet werden.

Vorzugsweise umfasst die Entwässerungsvorrichtung eine zugeordnete Reinigungsvorrichtung zur Wasseraufbereitung. Unter Reinigungsvorrichtung sind hier sämtliche Reinigungsvorrichtungen zu verstehen, die der Abscheidung von im Wasser enthaltenen Stör- und Schmutzstoffen dienen können. Hierbei zu erwähnen sind insbesondere Filtereinrichtungen, Sandfänge, Abscheider oder ähnliche Einrichtungen. Dabei ist eine Anordnung bezüglich der Entwässerungsvorrichtung mittels zusätzlicher Leitungselemente, oder aber auch direkt im "Entwässerungspfad" der Entwässerungsvorrichtung, denkbar. So ist es beispielsweise denkbar, entsprechende Filtersiebe an der Abdeckung der Versorgungsrinne zu montieren, die als Reinigungsvorrichtungen fungieren. Auch ist es denkbar, mehrere Versorgungsrinnen miteinander zu verbinden und die Reinigungsvorrichtung nur an speziellen zentralen Montagepunkten anzuordnen.

Neben der zuvor genannten Reinigungsvorrichtung können bei der Versorgungsrinne aber auch zusätzliche Versorgungsvorrichtungen vorgesehen sein, um beispielsweise das Bewässerungswasser vor dem Bewässern mit entsprechenden Dünge- oder sonstigen Zusätzen zu versehen.

Vorzugsweise weist die Versorgungsrinne eine Versorgungsvorrichtung und insbesondere eine Pumpe, zur Zuleitung von Bewässerungswasser, insbesondere aus dem Wasserreservoir über die Bewässerungsvorrichtung zum Auslasselement auf. Diese Versorgungsvorrichtung gewährleistet die ausreichende Wasserversorgung der Bewässerungsvorrichtung, wobei hier sämtliche aus dem Stand der Technik bekannten Verfahren und Techniken anwendbar sind.

Vorzugsweise weist die Versorgungsrinne bzw. die Be- und/oder die Entwässerungsvorrichtung wenigstens ein Heizelement auf, um insbesondere bei kalten Temperaturen die ordnungsgemäße Funktion der Be- und/oder Entwässerungsvorrichtung sicher zu stellen. Hier sind sämtliche aus dem Stand der Technik bekannten Heizelemente zur Beheizung von Rohrleitungssystemen oder ähnlichen Systemen denkbar. Insbesondere kann hier auf entsprechende Elektroheizungen, Elektroheizmanschetten zurückgegriffen werden.

Wie zuvor bereits erwähnt, umfasst vorliegende Erfindung nicht nur eine Versorgungsrinne, sondern auch ein Be- und Entwässerungssystem, mit wenigstens einer Versorgungsrinne der zuvor genannten Art. Für dieses Be- und Entwässerungssystem gelten die identischen Vorteile und Ausführungsformen, wie sie in den vorhergehenden Absätzen beschrieben wurden.

Weitere Ausführungsformen der Erfindung ergeben sich aus den Unteransprüchen.

Im Folgenden wird die Erfindung anhand einiger Ausführungsbeispiele beschrieben, die anhand der Zeichnungen näher erläutert werden.

Hierbei zeigen:
- - Fig. 1: Einen Querschnitt durch eine erste Ausführungsform der erfindungsgemäßen Versorgungsrinne;
- - Fig. 2: eine schematische Darstellung der erfindungsgemäßen Versorgungsrinne bzw. des erfindungsgemäßen Be- und Entwässerungssystems einer zweiten Ausführungsform;
- - Fig. 3: einen Längsschnitt durch die Ausführungsform aus Fig. 1 entlang der Linie III-III;
- - Fig. 4: einen Querschnitt durch eine dritte Ausführungsform der Versorgungsrinne, und
- - Fig. 5: einen Querschnitt durch eine vierte Ausführungsform der erfindungsgemäßen Versorgungsrinne.

Im Folgenden werden für gleiche und gleich wirkende Bauteile dieselben Bezugsziffern verwendet, wobei bei mehreren dargestellten gleichen Bauteilen bisweilen durch Hochkomma indizierte Bezugszeichen verwendet werden.

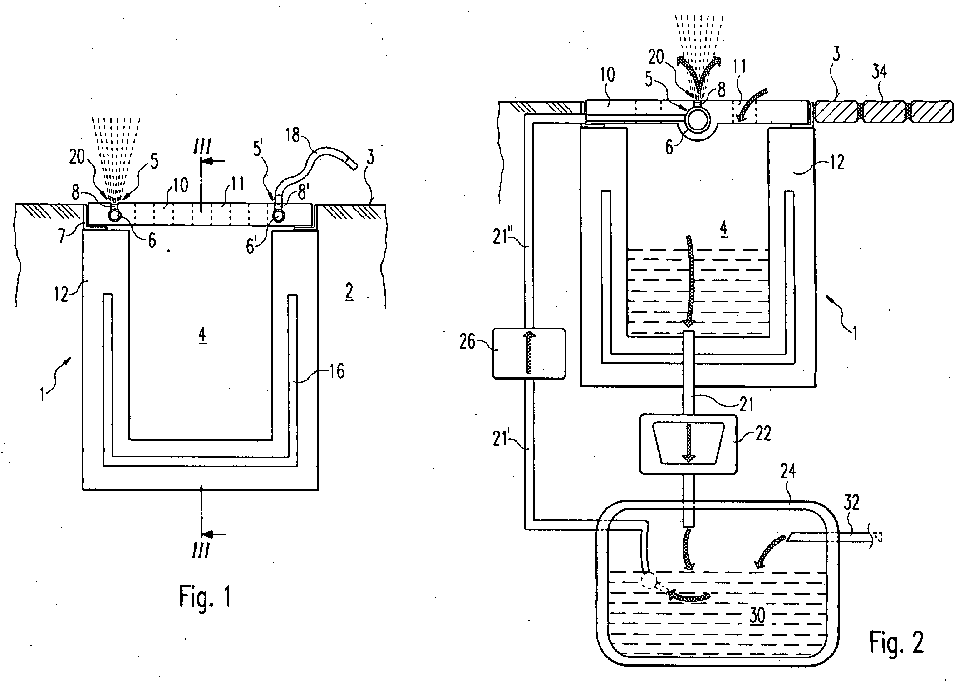

Fig. 1 zeigt einen Querschnitt einer ersten Ausführungsform der erfindungsgemäßen Versorgungsrinne. Die hier dargestellte Versorgungsrinne 1 umfasst zwei Bewässerungsvorrichtungen 5, 5' und eine Entwässerungsvorrichtung 4. Die Entwässerungsvorrichtung 4 wird durch einen Rinnenkörper 12 gebildet, der hier in Form eines U-Profils ausgeführt ist und die Ableitung von Oberflächenwasser erlaubt.

Die Versorgungsrinne 1 umfasst weiter eine Abdeckung 10, die über eine Zarge 7 auf dem Rinnenkörper 12 gelagert ist. Der Rinnenkörper 12 ist dabei derart in einen Boden 2 eingebaut, dass ein Oberflächenwasser, von der Oberfläche 3 über entsprechende Einlauföffnungen 11 der Abdeckung 10 in die Entwässerungsvorrichtung 4 eintreten und von dort abgeleitet werden kann.

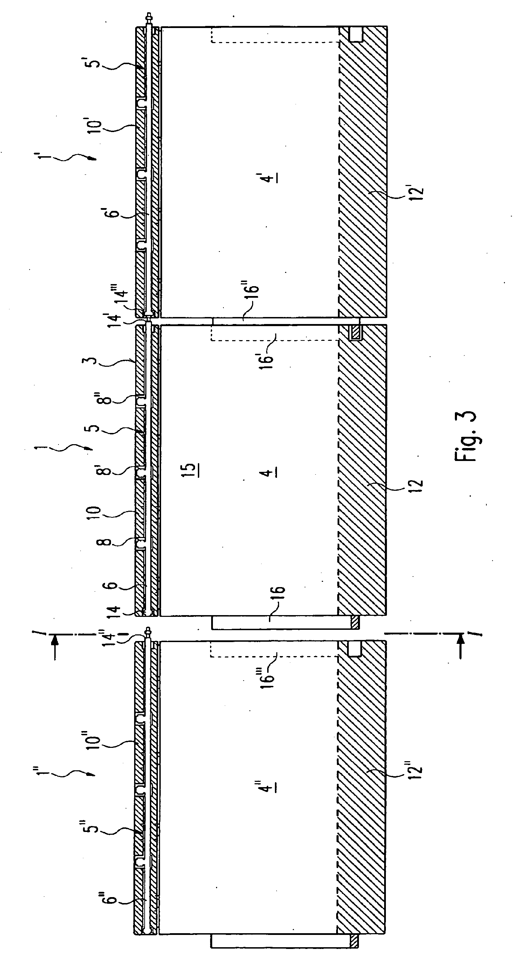

Zur Kombination mehrerer Versorgungsrinnen 1 weist die hier gezeigte Ausführungsform auf wenigstens einer Seite ein Verbindungselement 16 auf, das mit einem komplementären Verbindungselement 16"' (siehe Fig. 3) in eine im Wesentlichen fluiddichte Wirkverbindung gebracht werden kann.

In die Abdeckung 10 sind bei dieser Ausführungsform zwei Bewässerungsvorrichtungen 5, 5' integriert, die der Bewässerung der angrenzenden Oberfläche 3 oder einer ähnlichen Oberfläche dienen können. Beide Bewässerungsvorrichtungen 5, 5' umfassen eine in die Abdeckung 10 integrierte Bewässerungszuleitung 6, 6', die der Zuleitung von Bewässerungswasser dienen. Weiter umfassen die Bewässerungsvorrichtungen 5, 5' entsprechende Auslasselemente 8, 8', die mit den Bewässerungszuleitungen 6, 6' in Fluidverbindung stehen. Bei dieser Ausführungsform ist das eine Auslasselement 8 direkt als Sprinkler-Einrichtung 20 ausgerichtet, was bedeutet, dass bei Zuleitung von Bewässerungswasser über die Bewässerungszuleitung 6 zum Auslasselement 8 das zugeleitete Bewässerungswasser austritt und die angrenzende Oberfläche 3 bewässert.

Das zweite hier dargestellte Auslasselement 8' ist als Schnellverschlusselement ausgebildet, das das einfache und schnelle Anschließen eines Bewässerungsmittels 18 erlaubt. Dieses Bewässerungsmittel 18 ist hier als Bewässerungsschlauch ausgebildet, der an das Auslasselement 8' angeschlossen werden kann. Vorzugsweise ist hier das Auslasselement 8' als Ventil ausgebildet, so dass nach dem Anschluss des Bewässerungsmittels 18 eine Fluidverbindung zwischen der Bewässerungszuleitung 6 und dem Bewässerungsmittel 18 entsteht. Natürlich ist es in diesem Zusammenhang auch möglich, entsprechende automatische Bewässerungseinrichtungen vorzusehen, die bei Bedarf aus der Abdeckung 10 herausfahren und sich nach Gebrauch wieder automatisch versenken. Prinzipiell sind hier sämtliche aus dem Stand der Technik bekannten Bewässerungstechniken und -systeme anwendbar.

Fig. 2 zeigt das erfindungsgemäße Be- und Entwässerungssystem bzw. die erfindungsgemäße Versorgungsrinne 1 in einer zweiten Ausführungsform, wobei hier ein geschlossener Be- und Entwässerungskreislauf ausgebildet ist. Oberflächenwasser tritt von der Oberfläche 3 über die Einlauföffnungen 11 der Abdeckung 10 in die Versorgungsrinne 1 ein und wird dort über die Entwässerungsvorrichtung 4, die hier ebenfalls durch einen Rinnenkörper 12 gebildet wird, abgeleitet.

Das abgeleitete Wasser fließt bei dieser Ausführungsform über entsprechende Leitungsmittel 21 durch eine Reinigungsvorrichtung 22, die im abgeleiteten Wasser enthaltene Schmutzpartikel ausfiltert. Das so gereinigte abgeleitete Oberflächenwasser wird anschließend in einem Wasserreservoir 24 aufgefangen und steht der Bewässerungsvorrichtung 5 der Versorgungsrinne 1 als Bewässerungswasser 30 zur Verfügung.

Das Wasserreservoir 24 wird jedoch nicht nur über die Entwässerungsvorrichtung 4 und die Reinigungsvorrichtung 22 mit Bewässerungswasser versorgt, sondern sie umfasst auch eine externe Zuleitung 32, die bei dieser Ausführungsform beispielsweise einen Brauchwasseranschluss der öffentlichen Wasserversorgung darstellt. So ist gewährleistet, dass auch bei geringen abgeleiteten Wassermengen ausreichend Bewässerungswasser 30 zur Verfügung steht.

Über eine hier als Saugpumpe ausgeführte Versorgungsvorrichtung 26 wird das zuvor gesammelte Bewässerungswasser 30 aus dem Wasserreservoir 24 über entsprechende Leitungsmittel 21', 21" den Bewässerungszuleitungen 6 der Bewässerungsvorrichtung 5 zugeführt, die bei dieser Ausführungsform mittig in die Abdeckung 10 der Versorgungsrinne 1 integriert sind. Von dort fließt das Wasser aufgrund des durch die Versorgungsvorrichtung 26 aufgebauten Versorgungsdruckes zu dem Auslasselement 8. Mit dem Auslasselement 8 verbunden ist bei dieser Ausführungsform eine Sprinkler-Einrichtung 20, die der Verteilung des zugeführten Bewässerungswassers 30 auf die angrenzenden Oberflächen 3 dient. Je nach Oberflächenbeschaffenheit kann dann wieder ein Teil des ausgegebenen Bewässerungswassers 30 über die Einlauföffnungen 11 der Entwässerungsvorrichtung 4 zugeführt werden, so dass ein Be- und Entwässerungssystem gebildet wird, das einen deutlich reduzierten Wasserbedarf aufweist, da ein Teil des Bewässerungswassers in den Bewässerungskreislauf zurückgeführt wird. Dies ist insbesondere bei dieser Ausführungsform der Fall, die eine der Versorgungsrinne 1 zugeordnete Pflasteroberfläche 34 aufweist, über die anfallendes Niederschlagswasser und natürlich auch über die Sprinkler-Einrichtung 20 zugeführtes Bewässerungswasser wieder der Entwässerungsvorrichtung 4 zugeführt werden kann.

Die in Fig. 2 dargestellte Reinigungsvorrichtung 22 kann selbstverständlich auch direkt an der Abdeckung 10 befestigt werden, um hier eine Reinigung des abzuleitenden Wassers zu bewerkstelligen. Dies ist insbesondere bei der Ausbildung der Versorgungsrinne 1 als Einlaufschacht mit geringer Längsausdehnung vorteilhaft.

Fig. 3 zeigt die Ausführungsform aus Fig. 1 in einem Längsschnitt entlang der Linie III-III aus Fig. 1. Dargestellt sind hier drei Versorgungseinrichtungen 1, 1', 1", die je eine Entwässerungsvorrichtung 4, 4', 4" aufweisen, die über entsprechende Verbindungselemente 16, 16', 16", 16"' miteinander insbesondere fluiddicht verbunden werden können.

Da alle drei gezeigten Versorgungsrinnen 1, 1', 1" im Wesentlichen identisch sind, wird hier der Einfachheit halber im Wesentlichen die mittlere Versorgungsrinne 1 detailliert beschrieben. Sämtliches gilt adequat für die beiden anderen Vesorgungsrinnen 1', 1".

Zu erkennen ist in diesem Längsschnitt die Abdeckung 10, die auf den Rinnenkörper 12 der Versorgungsrinne 1 aufgelegt ist. In die Abdeckung 10 ist die Bewässerungsvorrichtung 5 integriert. Diese umfasst, wie bereits erwähnt, die Bewässerungszuleitung 6, an die bei dieser Ausführungsform entsprechende Auslasselemente 8, 8', 8" angeschlossen sind.

Über diese Auslasselemente kann, wie ebenfalls bereits erwähnt, dann ein entsprechendes Bewässerungsmittel 18 (siehe Fig. 1) angeschlossen werden. Zudem ist bei einer besonderen Ausführungsform des Auslasselementes 8, 8', 8" auch eine direkte Ausbildung als Sprinkler-Einrichtung 20 (siehe Fig. 1) denkbar.

Die Bewässerungsvorrichtung 5 umfasst jeweils zwei Adapterelemente 14, 14', die dem Anschluss weiterer Bewässerungsvorrichtungen 5' bzw. 5" dienen. Diese Adapterelemente 14 sind dabei jeweils komplementär ausgebildet, so dass wie bei dieser Ausführungsform, die Bewässerungsvorrichtung 5" mit dem Adapterelement 14" einfach an die Bewässerungsvorrichtung 5 mit ihrem Adapterelement 14' angeschlossen werden kann. Bei dieser Ausführungsform handelt es sich um eine einfache Steckverbindung, so dass sehr schnell und sehr einfach die Fluidverbindung zwischen den Bewässerungsvorrichtungen 5, 5', 5" hergestellt werden kann. Vorzugsweise dienen die dabei verwendeten Adapterelemente 14, 14', 14", 14"' auch als Führungselemente, so dass die Abdeckungen 10, 10', 10" in ihrer Lagerung geführt bzw. fixiert sind.

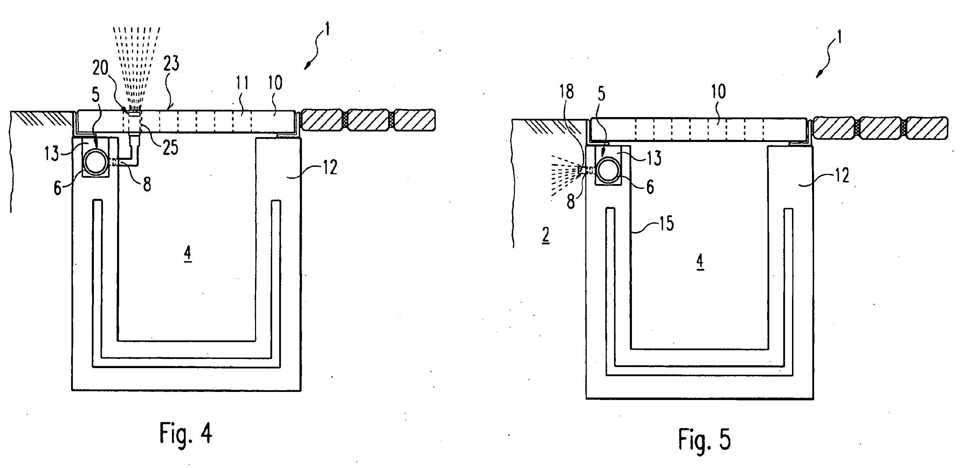

Ähnliches würde auch dann gelten, wenn die Bewässerungsvorrichtungen 5, 5', 5" nicht in die Abdeckungen 10, 10', 10", sondern in die Rinnenkörper 12, 12', 12" integriert wären (siehe beispielsweise Fig. 4 und 5). Auch dann könnten die Adapterelemente 14, 14', 14" eine Längsführung der jeweils verbundenen Rinnenkörper 12, 12', 12" bewirken bzw. diese unterstützen.

Neben der Ausrichtung der Auslasselemente 8, 8', 8" der Bewässerungsvorrichtung 5 in Richtung einer Oberfläche 3 ist es natürlich auch möglich, die Adapterelemente oder wenigstens ein Adapterelement in Richtung einer Innenseite 15 des Rinnenkörpers 12 auszurichten (nicht dargestellt). Dadurch wäre es möglich, in bestimmten Abständen die Innenseite 15 des Rinnenkörpers 12 und somit die Entwässerungsvorrichtung 4 durchzuspülen und zu reinigen. Auch hier wäre dann eine entsprechende Ausbildung des jeweiligen nach innen gerichteten Adapterelementes als Sprüh- oder Reinigungselement mit speziellem Reinigungsstrahl etc. oder eine entsprechende Anordnung eines zusätzlichen Reinigungselementes (nicht dargestellt) möglich.

Die Fig. 4 und 5 zeigen zwei weitere Ausführungsformen der erfindungsgemäßen Versorgungsrinne 1, wobei hier ein wesentlicher Teil der Bewässerungsvorrichtung 5 in den Rinnenkörper 12 der Versorgungsrinne 1 integriert ist. Dazu weist der Rinnenkörper 12 bei dieser Ausführungsform eine Ausnehmung 13 auf, in die die Bewässerungszuleitung 6 der Bewässerungsvorrichtung 5 eingelegt ist. Dies hat den Vorteil, dass zum einen die Entwässerungsvorrichtung 4 nicht durch die Bewässerungsvorrichtung 5 behindert wird und darüber hinaus im Gegensatz zu der in der Abdeckung 10 geführten Bewässerungsvorrichtung 5 eine Demontage der Abdeckung 10 unproblematisch möglich ist.

Bei der Ausführungsform in Fig. 4 ist an der Bewässerungszuleitung 6 der Bewässerungsvorrichtung 5 wenigstens ein Auslasselement 8 vorgesehen, das hier als Winkelstück ausgebildet ist und durch die Abdeckung 10 geführt ist bzw. von einer Außenseite 23 erreichbar ist. Bei dieser Ausführungsform kann so beispielsweise eine eigenständige Sprinkler-Einrichtung 20 oder eine ähnliche Bewässerungseinrichtung mit dem Auslasselement 8 verbunden werden, ohne dass die Abdeckung 10 aus ihrer Lagerung entfernt werden muss. Dazu kann in der Abdeckung 10 entweder eine entsprechende Zugangsöffnung 25 vorgesehen sein, oder eine in der Abdeckung vorhandene Einlauföffnung 11 verwendet werden. Natürlich ist es aber auch hier wie schon bei den Ausführungsformen zuvor möglich, das Auslasselement 8 selber direkt als Bewässerungsmittel auszubilden, so dass keine zusätzlichen Bewässerungsmittel 18, wie bei dieser Ausführungsform die Sprinkler-Einrichtung 20, aufgesteckt oder sonstwie verbunden werden muss.

Möglich ist es darüber hinaus bei dieser Ausführungsform, in die Ausnehmung 13 eine Heizeinrichtung zu integrieren, die die Bewässerungsvorrichtung 5 bei niedrigen Temperaturen vor dem Einfrieren bewahrt (nicht dargestellt).

Fig. 5 schließlich zeigt eine zu Fig. 4 ähnliche Ausführungsform, wobei auch hier die Bewässerungsvorrichtung 5 in eine Ausnehmung 13 des Rinnenkörpers 12 integriert ist. In diesem Zusammenhang sei erwähnt, dass natürlich an Stelle einer Ausnehmung 13 auch eine einfache Halterung beispielsweise an der Innenseite 15 des Rinnenkörpers 12 verwendet werden kann, um die Bewässerungsvorrichtung 5 an der Versorgungsrinne 1 anzuordnen.

Bei dieser Ausführungsform zeigt das Auslasselement 8 in Richtung des Bodens 2, so dass hier über ein entsprechendes Bewässerungsmittel 18, das hier integral am Auslasselement 8 ausgebildet ist, eine Wurzelbewässerung erfolgen kann.

Grundsätzlich sei zu den letzten beiden Ausführungsformen erwähnt, dass an Stelle der Ausbildung einer Ausnehmung 13 in Verbindung mit der Bewässerungszuleitung 6 auch eine in den Rinnenkörper 12 integrierte Aussparung (nicht dargestellt) ausgebildet werden kann, die, ohne die spezielle Verwendung einer Bewässerungszuleitung 6, als eine solche fungiert.

### Bezugszeichenliste

- 1: Versorgungsrinne
- 2: Boden
- 3: Oberfläche
- 4: Entwässerungsvorrichtung
- 5: Bewässerungsvorrichtung
- 6: Bewässerungszuleitung
- 7: Zarge
- 8: Auslasselement
- 10: Abdeckung
- 11: Einlauföffnung
- 12: Rinnenkörper
- 13: Ausnehmung
- 14: Adapterelement
- 15: Innenseite
- 16: Verbindungselement
- 18: Bewässerungsmittel
- 20: Sprinkler-Einrichtung
- 21: Leitungsmittel
- 22: Reinigungsvorrichtung
- 23: Außenseite
- 24: Wasserreservoir
- 25: Zugangsöffnung
- 26: Versorgungsvorrichtung
- 30: Bewässerungswasser bzw. Wasser
- 32: externe Zuleitung
- 34: Pflasteroberfläche

## Patentansprüche

1. Versorgungsrinne (1) zur Oberflächenbe- und entwässerung,
mit einer Entwässerungsvorrichtung (4), zur Ableitung von Oberflächenwasser, und einer Bewässerungsvorrichtung (5), zur Oberflächenbewässerung, mit wenigstens einem Auslasselement (8), insbesondere zum Anschluss eines Bewässerungsmittels (18;20), und wenigstens
einer Bewässerungszuleitung (6) zur Zuleitung von Bewässerungswasser (30) zu dem Auslasselement (8), wobei
die Bewässerungsvorrichtung (5) und insbesondere die Bewässerungszuleitung (6) eine Druckleitung umfasst, und wobei die Entwässerungsvorrichtung (4) und die Bewässerungsvorrichtung (5) in die Versorgungsinne integriert sind.

2. Versorgungsrinne gemäß Anspruch 1,
**dadurch gekennzeichnet, dass**
die Bewässerungsvorrichtung (5) wenigstens teilweise in eine Abdeckung (10) der Versorgungsrinne (1) integriert ist.

3. Versorgungsrinne gemäß einem der vorhergehenden Ansprüche,
**dadurch gekennzeichnet,** das
das Auslasselement (8) in die Abdeckung (10) integriert ist.

4. Versorgungsrinne gemäß einem der vorhergehenden Ansprüche,
**dadurch gekennzeichnet, dass**
die Bewässerungsvorrichtung (5) wenigstens teilweise in einen Rinnenkörper (12) der Versorgungsrinne (1) integriert ist.

5. Versorgungsrinne gemäß einem der vorhergehenden Ansprüche,
**dadurch gekennzeichnet, dass**
die Bewässerungsvorrichtung (5) wenigstens ein Adapterelement (14) zum insbesondere fluiddichten Anschluss einer weiteren Bewässerungsvorrichtung (5") umfasst.

6. Versorgungsrinne gemäß einem der vorhergehenden Ansprüche,
**dadurch gekennzeichnet, dass**
die Entwässerungsvorrichtung (4) wenigstens ein Verbindungselement (16) zum insbesondere fluiddichten Anschluss einer weiteren Entwässerungsvorrichtung (4") umfasst.

7. Versorgungsrinne gemäß einem der vorhergehenden Ansprüche,
**dadurch gekennzeichnet, dass**
das Auslasselement (8) ein Schnellverschlusselement zum Anschluss eines Bewässerungsmittels (18) und insbesondere einer Sprinklereinrichtung (20) aufweist.

8. Versorgungsrinne gemäß einem der vorhergehenden Ansprüche,
**gekennzeichnet durch,** ein
Wasserreservoir (24), das mit der Entwässerungsvorrichtung (4) und der Bewässerungsvorrichtung (5) in Fluidverbindung steht.

9. Versorgungsrinne gemäß einem der vorhergehenden Ansprüche,
**gekennzeichnet durch**
eine der Entwässerungsvorrichtung (4) zugeordnete Reinigungsvörrichtung (22) zur Wasseraufbereitung.

10. Versorgungsrinne gemäß einem der vorhergehenden Ansprüche,
**gekennzeichnet durch**
eine Versorgungsvorrichtung (26) und insbesondere eine Pumpe, zur Zuleitung von Bewässerungswasser (30), insbesondere aus einem Wasserreservoir (24) über die Bewässerungsvorrichtung (5) zum Auslasselement (8).

11. Versorgungsrinne gemäß einem der vorhergehenden Ansprüche,
**dadurch gekennzeichnet, dass**
die Versorgungsrinne und insbesondere die Bewässerungsvorrichtung (5) wenigstens ein Heizelement aufweist.

12. Be- und Entwässerungssystem, mit
wenigstens einer Versorgungsrinne (1) gemäß einem der vorhergehenden Ansprüche.

## Claims

1. Supply channel (1) for surface irrigation and drainage, having a drainage apparatus (4), for channelling away surface water, and having an irrigation apparatus (5), for surface irrigation, having at least one outlet element (8), in particular for the connection of an irrigation means (18; 20), and having at least one irrigation feedline (6), for feeding irrigation water (30) to the outlet element (8), wherein
the irrigation apparatus (5), and in particular the irrigation feedline (6), comprises a pressure line, and wherein the drainage apparatus (4) and the irrigation apparatus (5) are integrated in the supply channel.

2. Supply channel according to Claim 1,
**characterized in that**
the irrigation apparatus (5) is integrated, at least in part, in a covering (10) of the supply channel (1).

3. Supply channel according to one of the preceding claims,
**characterized in that**
the outlet element (8) is integrated in the covering (10).

4. Supply channel according to one of the preceding claims,
**characterized in that**
the irrigation apparatus (5) is integrated, at least in part, in a channel body (12) of the supply channel (1).

5. Supply channel according to one of the preceding claims,
**characterized in that**
the irrigation apparatus (5) comprises at least one adapter element (14) for the in particular fluid-tight connection of a further irrigation apparatus (5").

6. Supply channel according to one of the preceding claims,
**characterized in that**
the drainage apparatus (4) comprises at least one connecting element (16) for the in particular fluid-tight connection of a further drainage apparatus (4").

7. Supply channel according to one of the preceding claims,
**characterized in that**
the outlet element (8) has a quick-closure element for the connection of an irrigation means (18) and, in particular, of a sprinkler device (20).

8. Supply channel according to one of the preceding claims,
**characterized by**
a water reservoir (24), which is in fluid connection with the drainage apparatus (4) and the irrigation apparatus (5).

9. Supply channel according to one of the preceding claims,
**characterized by**
a cleaning apparatus (22), which is assigned to the drainage apparatus (4) and is intended for water-treatment purposes.

10. Supply channel according to one of the preceding claims,
**characterized by**
a supply apparatus (26), and in particular a pump, for feeding irrigation water (30), in particular from a water reservoir (24), via the irrigation apparatus (5), to the outlet element (8).

11. Supply channel according to one of the preceding claims,
**characterized in that**
the supply channel, and in particular the irrigation apparatus (5), has at least one heating element.

12. Irrigation and drainage system having at least one supply channel (1) according to one of the preceding claims.

## Revendications

1. Rainure de distribution (1) pour l'irrigation et le drainage de surfaces,
comprenant un dispositif de drainage (4), pour évacuer l'eau de surface, et un dispositif d'irrigation (5) pour irriguer la surface, comprenant au moins un élément de sortie (8), notamment pour le raccordement d'un moyen d'irrigation (18 ; 20), et au moins une conduite d'alimentation d'irrigation (6) pour amener de l'eau d'irrigation (30) à l'élément de sortie (8),
le dispositif d'irrigation (5) et notamment la conduite d'alimentation d'irrigation (6) comprenant une conduite sous pression, et le dispositif de drainage (4) et le dispositif d'irrigation (5) étant intégrés dans la rainure de distribution.

2. Rainure de distribution selon la revendication 1,
**caractérisée en ce que**
le dispositif d'irrigation (5) est intégré au moins en partie dans un recouvrement (10) de la rainure de distribution (1).

3. Rainure de distribution selon l'une quelconque des revendications précédentes,
**caractérisée en ce que**
l'élément de sortie (8) est intégré dans le recouvrement (10).

4. Rainure de distribution selon l'une quelconque des revendications précédentes,
**caractérisée en ce que**
le dispositif d'irrigation (5) est intégré au moins en partie dans un corps de rainure (12) de la rainure de distribution (1).

5. Rainure de distribution selon l'une quelconque des revendications précédentes,
**caractérisée en ce que**
le dispositif d'irrigation (5) comprend au moins un élément adaptateur (14) pour le raccordement notamment fluidique d'un autre dispositif d'irrigation (5").

6. Rainure de distribution selon l'une quelconque des revendications précédentes,
**caractérisée en ce que**
le dispositif de drainage (4) comprend au moins un élément de liaison (16) pour le raccordement notamment fluidique d'un dispositif de drainage supplémentaire (4").

7. Rainure de distribution selon l'une quelconque des revendications précédentes,
**caractérisée en ce que**
l'élément de sortie (8) présente un élément de raccord rapide pour le raccordement d'un moyen d'irrigation (18) et notamment d'un dispositif de sprinkler (20).

8. Rainure de distribution selon l'une quelconque des revendications précédentes,
**caractérisée par**
un réservoir d'eau (24) qui est en liaison fluidique avec le dispositif de drainage (4) et le dispositif d'irrigation (5).

9. Rainure de distribution selon l'une quelconque des revendications précédentes,
**caractérisée par**
un dispositif de purification (22) associé au dispositif de drainage (4) pour le traitement de l'eau.

10. Rainure de distribution selon l'une quelconque des revendications précédentes,
**caractérisée par**
un dispositif de distribution (26) et notamment une pompe, pour l'apport en eau d'irrigation (30), notamment depuis un réservoir d'eau (24) par le biais du dispositif d'irrigation (5) jusqu'à l'élément de sortie (8).

11. Rainure de distribution selon l'une quelconque des revendications précédentes,
**caractérisée en ce que**
la rainure de distribution et notamment le dispositif d'irrigation (5) présentent au moins un élément chauffant.

12. Système d'irrigation et de drainage, comprenant au moins une rainure de distribution (1) selon l'une quelconque des revendications précédentes.
